# EUROPÄISCHE PATENTSCHRIFT

(11) **EP 0 682 065 B1**
(45) Veröffentlichungstag und Bekanntmachung des Hinweises auf die Patenterteilung: **14.01.1998**
(21) Anmeldenummer: 95105322.2
(22) Anmeldetag: 08.04.1995
(51) Int. Cl.: C08K 5/01, C08L 67/06, C08L 63/10, C08L 75/16

(54) **Inhibierte ungesättigte Polyesterharze**
Inhibited unsaturated polyester resins
Résines inhibées de polyester insaturé

(30) Priorität: 18.04.1994 DE 4413437
(43) Veröffentlichungstag der Anmeldung: 15.11.1995
(73) Patentinhaber: DSM RESINS B.V., 8022 AW Zwolle (NL)
(72) Erfinder: Lorenz, Reinhard, Dr., D-67117 Limburgerhof (DE); McKee, Graham Edmund, Dr., D-67433 Neustadt (DE); Günther, Heinz, D-67122 Altrip (DE)
(74) Vertreter: den Hartog, Jeroen Hendrikus Joseph

(56) Entgegenhaltungen:
- FR-A- 2 258 424
- DATABASE WPI Week 7716, Derwent Publications Ltd., London, GB; AN 77-28683Y & SU-A-493 482 (TSYBIN YU S) 15. Mai 1976
- DIE MAKROMOLEKULARE CHEMIE, Bd.155, 1972, BASEL CH Seiten 227 - 238 J.P. FISCHER

## Beschreibung

Die Erfindung betrifft ungesättigte Polyesterharze, die zu Formstoffen mit geringer Vergilbungsneigung ausgehärtet werden können.

Ungesättigte Polyesterharze werden häufig als Feinschichten Gelcoats), Lacke, Beschichtungsmaterialien sowie für Wellplatten, Lichtplatten, Lichtkuppeln und ähnliche Anwendungen eingesetzt. Hier ist es entscheidend, daß der Formstoff über sein ganzes Gebrauchsleben in einem optisch einwandfreien Zustand bleibt. Besonders unerwünscht ist die Vergilbung des Formstoffes durch Wärme, Licht oder Bewitterung. Diese Vergilbungsneigung hat bisher die Verwendung von UP-Harzen auf weniger anspruchsvolle Anwendungen beschränkt. Die Aufgabe der Erfindung bestand deshalb darin, ungesättigte Polyesterharze mit geringst möglicher Vergilbungsneigung bereitzustellen, ohne den günstigen Preis und die günstigen Verarbeitungseigenschaften (z.B. lange Topfzeit bei der Verarbeitung) zu beeinträchtigen.

Ungesättigte Polyesterharze enthalten üblicherweise Inhibitoren zur Stabilisierung gegen vorzeitiges Gelieren und zur gezielten Einstellung der Reaktivität. Es hat sich gezeigt, daß die meisten üblichen phenolischen Inhibitoren, z.B. Hydrochinon und Hydrochinonderivate die Vergilbung fördern.

Erfindungsgemäß wurde nun gefunden, daß bei Verwendung von 1,1-Diphenylethylen dies nicht der Fall ist.

Gegenstand der Erfindung sind demzufolge ungesättigte Polyesterharze mit geringer Vergilbungsneigung, enthaltend
A. einen ungesättigten Polyester,
B. ein copolymerisierbares Monomeres,
C. 100 bis 20.000 ppm, bezogen auf A + B, eines Inhibitors, sowie
D. übliche Zusatzstoffe,
wobei der Inhibitor 1,1-Diphenylethylen ist.

Zu den einzelnen Komponenten ist folgendes zu sagen:

### A. Ungesättigte Polyester

Ungesättigte Polyester A sind die üblichen Kondensationsprodukte aus mehrwertigen, insbesondere zweiwertigen Carbonsäuren und deren veresterbaren Derivaten, insbesondere deren Anhydriden, und mehrwertigen, insbesondere zweiwertigen Alkoholen, die gegebenenfalls zusätzlich Reste einwertiger Carbonsäuren, einwertiger Alkohole oder Reste von Hydroxycarbonsauren enthalten, wobei zumindest ein Teil der Reste über ethylenisch ungesättigte copolymerisierbare Gruppen verfügen muß.

Da Formstoffe, die noch Doppelbindungen enthalten, besonders stark zum Vergilben neigen, und da bei Verwendung von Maleinsäureanhydrid als Dicarbonsaurekomponente die Copolymerisation mit Styrol nicht ganz vollständig ist, setzt man bevorzugt Fumarsäure als ungesättigte Dicarbonsäure ein, gegebenenfalls im Gemisch mit Adipinsäure, Phthalsäure, Isophthalsaure und/oder Terephthalsäure.

Da Etherglykole ebenfalls die Vergilbung fördern, setzt man als Glykolkomponente bevorzugt Ethylenglykol, Propylenglykol und/oder Neopentylglykol ein.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugsweise Methacrylsäure. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbestandigkeit bei begrenzter Wärmeformbeständigkeit aus. Vinylesterharze aus Epoxy-Novolakharzen und (Meth-)Acrylsaure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe 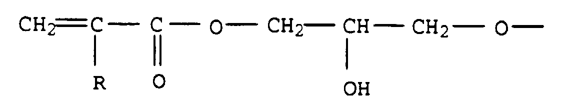 mit R=H oder CH₃.

Schließlich sind auch Vinylesterurethane als ungesättigte Polyester geeignet. Sie weisen im allgemeinen folgende Gruppen auf:
a) 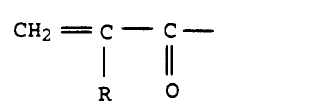 (mit R = H oder CH₃).
b) 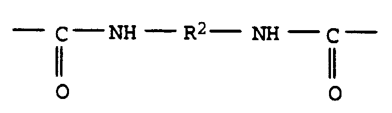 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
c)

   - O - R³ - O -

   (mit R⁴ = aliphatischer, cycloaliphatischer oder aromatischer Rest mit 2 bis 100 C-Atomen).

Vorzugsweise ist das Vinylesterurethan ein Umsetzungsprodukt aus
- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,
wobei bei der Umsetzung das Gewichtsverhältnis Isocyanat: (Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

### B. Monomere

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann teilweise durch andere übliche ethylenisch polymerisierbare Monomere ersetzt werden, z.B. Vinylverbindungen, wie substituierte Styrole, Ester der Acryl- und Methacrylsäure oder Allylverbindungen, wie Diallylphthalat.

### C. Inhibitoren

Die ungesättigten Polyesterharze enthalten erfindungsgemaß 100 bis 20.000 ppm, vorzugsweise 1.000 bis 10.000 ppm, 1,1-Diphenylethylen. Daneben können in geringen Mengen herkömmliche Inhibitoren anwesend sein. Eine bevorzugte Inhibitorkombination besteht aus
1.000 bis 2.000 ppm 1,1-Diphenylethylen und
20 bis 200 ppm 4-tert.Butylbrenzkatechin.

Neben der Komponente C können die erfindungsgemäßen Harze noch weitere übliche Zusatzstoffe D enthalten, wie Verstärkungsfasern, z.B. Glas- und Kohlenstoff-Fasern; Füllstoffe z.B. Kreide, Quarz, Aluminiumoxidhydrat; Thixotropiermittel; Gleitmittel wie z.B. Stearate; Initiatoren, wie z.B. tert.-Butylperethylhexanoat, Benzoylperoxid oder tert.-Butylperbenzoat für die Warmhärtung bzw. Methylethylketonperoxid, Acetylacetonperoxid oder Cyclohexanonperoxid für die Kalthärtung, in Kombination mit Härtungsbeschleunigern, z.B. Cobaltkomplexen oder aromatischen Aminen; Photoinitiatoren, wie Benzoinether, Benzilketale oder Acylphosphinoxide.

Durch Zusatz einer Kombination aus einem primären und einem sekundären Antioxidanz kann die Vergilbungsneigung weiter unterdrückt werden. Bevorzugt ist eine Kombination aus
a) 100 bis 3.000 ppm, bezogen auf A + B, 2,6-Di-tert.-butyl-p-Kresol oder 3-(3,5-Di-tert.-butyl-4-hydroxyphenyl)-propionsäureoktadecylether und
b) 50 bis 500 ppm Triphenylphosphit oder ein Trialkylderivat des Triphenylphosphits.

Die erfindungsgemaßen Harze werden zur Herstellung solcher Formkörper eingesetzt, bei denen eine Vergilbung störend wäre.

### Beispiele

### Herstellung des UP-Harzes

580,4 g (5 mol) Fumarsäure, 740,6 g (5 mol) Phthalsäureanhydrid, 1461,4 g (10 mol) Adipinsäure, 1266,2 g (20,4 mol) Ethylenglykol, 0,526 g (100 ppm) 2,6-Di-tert.-butyl-p-kresol und 0,878 g (167 ppm) Triphenylphosphit sowie verschiedene Mengen verschiedene Inhibitoren werden unter Stickstoff innerhalb von 5 h in einer Kondensationsapparatur auf 195°C aufgeheizt. Nach 18 h bei 195°C wird eine Schmelzviskosität von 980 mPa·s (gemessen bei 100°C, 10.000 s⁻¹) und eine Säurezahl von 25,2 mg KOH/g Polymer erreicht. Der Polyester wird auf 120°C abgekühlt und mit 1841 g Styrol gemischt, in dem 9,993 g (1900 ppm) 2,6-Di-tert.-butyl-p-kresol gelöst sind.

### Prüfplatten - Herstellung und Vergilbungstest:

Man gießt eine 3 bis 4 mm starke Reinharzplatte (300 g Harz + 3 g tert.-Butyl-perethylhexanoat), die 1 h bei 80°C gehärtet wird. Die Prüfplatte wird dann 7 d bei 120°C in einem Umluftschrank gelagert; die Vergilbung wird visuell durch Vergleich verschiedener Prüfplatten bestimmt.

### Ergebnisse

In der Tabelle sind die verwendeten Inhibitoren, die zur Einstellung der Reaktivität des Harzes notwendige Inhibitormenge und die im Vergilbungstest ermittelte Vergilbung zusammengestellt. Gefordert wird eine Reaktivität, die einer Härtezeit von 7,75 ± 0,75 min (nach DIN 16 945) entspricht.

Reaktivitätsmessung: 100 g Harz werden mit 15 g Styrol und 1,725 g tert.-Butyl-perethylhexanoat intensiv vermischt und bei 80°C nach DIN 16 945 gehärtet.

| Bsp | Inhibitor | Inhibitormenge [ppm] | Vergilbung nach 7 d [120°C] |
|---|---|---|---|
| 1 | Hydrochinon | 100 | stark |
| 2 | Chinhydron | 50 | stark |
| 3 | p-Benzochinon | 50 | stark |
| 4 | Hydrochinonmonomethylether | 750 | stark |
| 5 | 4,4'-Thio-bis-(2-tert.-butyl-5-methyl-phenol) | 1000 | stark |
| 6 | 4,4'-Butyliden-bis-(2-tert.-butyl-5-methyl-phenol) | 2000 | stark |
| 7 | 1,1-Diphenylethylen | 2500 | gering |
| 8 | 1,1-Diphenylethylen | 1500 | gering |
| | 4-tert.Butylbrenzkatechin | 100 | |
| 9 | ohne Inhibitor | | gering |

Die Beispiele 7 und 8 sind erfindungsgemäß, alle anderen Beispiele sind Vergleichsbeispiele.

Das Harz in Beispiel 9 war bereits nach 4 1/2 min geliert.

## Patentansprüche

1. Ungesättigte Polyesterharze mit geringer Vergilbungsneigung, enthaltend
A. einen ungesättigten Polyester,
B. ein copolymerisierbares Monomeres,
C. 100 bis 20.000 ppm, bezogen auf A + B, eines Inhibitors, sowie
D. übliche Zusatzstoffe,
dadurch gekennzeichnet, daß der Inhibitor 1,1-Diphenylethylen ist.

2. Ungesättigte Polyesterharze nach Anspruch 1, dadurch gekennzeichnet, daß sie als Inhibitoren
1.000 bis 2.000 ppm 1,1-Diphenylethylen und
20 bis 200 ppm 4-tert.Butylbrenzkatechin enthalten.

3. Ungesättigte Polyesterharze nach Anspruch 1, dadurch gekennzeichnet, daß der ungesättigte Polyester A ein Kondensationsprodukt von
a) Fumarsäure, gegebenenfalls zusammen mit Adipinsäure, Phthalsäure, Isophthalsäure und/oder Terephthalsäure einerseits und
b) Ethylenglykol, Propylenglykol und/oder Neopentylglykol andererseits ist.

4. Ungesättigte Polyesterharze nach Anspruch 1, dadurch gekennzeichnet, daß das copolymerisierbare Monomer B Styrol ist.

5. Ungesättigte Polyesterharze nach Anspruch 1, dadurch gekennzeichnet, daß sie zusätzlich eine Kombination aus einem primären Antioxidanz und einem sekundären Antioxidanz enthalten.

6. Ungesättigte Polyesterharze nach Anspruch 5, dadurch gekennzeichnet, daß sie
a) 100 bis 3.000 ppm, bezogen auf A + B, 2,6-Di-tert.-butyl-p-Kresol oder 3-(3,5-Di-tert.-butyl-4-hydroxyphenyl)propionsäureoktadecylether und
b) 50 bis 500 ppm Triphenylphosphit oder ein Trialkylderivat des Triphenylphosphits
enthalten.

## Claims

1. Unsaturated polyester resins having a low tendency to yellowing, containing
A. an unsaturated polyester,
B. a copolymerisable monomer,
C. from 100 to 20,000 ppm, based on A + B, of an inhibitor, and
D. conventional additives,
characterised in that the inhibitor is 1,1-diphenylethylene.

2. Unsaturated polyester resins according to claim 1, characterised in that they contain as inhibitors
1,000 to 2,000 ppm 1,1-diphenylethylene and
20 to 200 ppm 4-tert.-butylcatechol.

3. Unsaturated polyester resins according to claim 1, characterised in that the unsaturated polyester A is a condensation product of
a) fumaric acid, optionally together with adipic acid, phthalic acid, isophthalic acid and/or terephthalic acid on the one hand and
b) ethylene glycol, propylene glycol and/or neopentyl glycol on the other.

4. Unsaturated polyester resins according to claim 1, characterised in that the copolymerisable monomer B is styrene.

5. Unsaturated polyester resins according to claim 1, characterised in that they contain in addition a combination of one primary antioxidant and one secondary antioxidant.

6. Unsaturated polyester resins according to claim 5, characterised in that they contain
a) 100 to 3,000 ppm, based on A + B, 2,6-di-tert.-butyl-p-cresol or 3-(3,5-di-tert.-butyl-4-hydroxyphenyl)propionic octadecyl ether and
b) 50 to 500 ppm triphenyl phosphite or a trialkyl derivative of triphenyl phosphate.

## Revendications

1. Résines de polyesters insaturés à faible tendance au jaunissement, qui contiennent
A. un polyester insaturé,
B. un monomère copolymérisable,
C. 100 à 20 000 ppm, par rapport à A + B, d'un ihibiteur et
D. des additifs usuels,
caractérisées en ce que l'inhibiteur est le 1,1-diphényléthylène.

2. Résines de polyesters insaturés selon revendication 1, caractérisées en ce qu'elles contiennent en tant qu'inhibiteurs
1.000 à 2.000 ppm de 1,1-diphényléthylène et
20 à 200 ppm de 4-tert-butylpyrocatéchol.

3. Résines de polyesters insaturés selon revendication 1, caractérisées en ce que le polyester insaturé A est un produit de condensation de
a) l'acide fumarique, le cas échéant avec l'acide adipique, l'acide phtalique, l'acide isophtalique et/ou l'acide téréphtalique, d'une part, et
b) l'éthylèneglycol, le propylèneglycol et/ou le néopentylglycol, d'autre part.

4. Résines de polyesters insaturés selon revendication 1, caractérisées en ce que le monomère copolymérisable B est le styrène.

5. Résines de polyesters insaturés selon revendication 1, caractérisées en ce qu'elles contiennent en outre une combinaison d'un antioxydant primaire et d'un antioxydant secondaire.

6. Résines de polyesters insaturés selon revendication 5, caractérisées en ce qu'elles contiennent
a) 100 à 3 000 ppm, par rapport à A + B, de 2,6-di-tert-butyl-p-crésol ou d'éther octadécylique de l'acide 3-(3,5-di-tert-butyl-4-hydroxyphényl)propionique
b) 50 à 500 ppm de phosphite de triphényle ou d'un dérivé trialkylique du phosphite de triphényle.
